# EUROPÄISCHE PATENTANMELDUNG

(11) **EP 1 180 632 A1**
(43) Veröffentlichungstag der Anmeldung: **20.02.2002**
(21) Anmeldenummer: 00810704.7
(22) Anmeldetag: 07.08.2000
(51) Int. Cl.: F16L 25/06

(54) **Axiales Sicherungssystem**

(71) Anmelder: ABB Turbo Systems AG, 5400 Baden (CH)
(72) Erfinder: Bättig, Josef, 5704 Egliswil (CH)
(74) Vertreter: ABB Patent Attorneys

(57) **Zusammenfassung**

Das erfindungsgemässe Sicherungssystem (16) dient der gegenseitigen axialen Fixierung zweier axialsymmetrischer, einander in axialer Richtung (14) angeordneter Bauteile (10, 12), wobei die einander überlappenden Bereiche radial formschlüssig ineinander greifen. Die Bauteile (10, 12) weisen in ihren einander überlappenden Bereichen Umfangnuten (18, 20) auf, die einander mit ihren offenen Seiten gegenüberliegen. In die erste Umfangsnut (18) des ersten Bauteils (10) ist eine Sicherungsvorrichtung (22) mit mindestens zwei Sicherungselementen (24) einsetzbar. Den Sicherungselementen (24) sind Verschiebemittel (30) zum Verschieben der Sicherungselemente (24) in radialer Richtung (29) zugeordnet. Die in die erste Umfangsnut (10) des ersten Bauteils (10) eingesetzten Sicherungselemente (24) sind durch die Verschiebemittel (30) radial aus der ersten Umfangsnut (10) herausschiebbar, so dass sie zur gegenseitigen, axialen Fixierung der Bauteile (10, 12) die Ränder (26) der ersten Umfangsnut (18) übergreifend in die zweite Umfangsnut (20) des zweiten Bauteiles (12) eingreifen.

## Beschreibung

### Technisches Gebiet

Die Erfindung bezieht sich auf ein Sicherungssystem zur gegenseitigen axialen Fixierung zweier axialsymmetrischer, einander in axialer Richtung überlappender Bauteile gemäss den Merkmalen des Oberbegriffes des Patentanspruches 1.

### Stand der Technik

Derartige Sicherungssysteme sind beispielsweise in Form von Sprengringen bekannt. Sprengringe sind jedoch zum einen nur für die Verbindung zylindrischer Bauteile verwendbar und zum anderen in der Regel für eine dauerhafte, nicht lösbare Verbindung gedacht. Abgesehen hiervon sind Sprengringe nur für begrenzte Durchmesser von weniger als 500mm erhältlich. Sollen beispielsweise zwei Rohre eines grösseren Durchmessers miteinander Verbunden werden, so müssen entweder die Rohre mit passenden Flanschen versehen und z.B. mittels Schrauben miteinander verbunden werden, oder aber man muss auf Rohrschellen zurückgreifen. Bei Rohren mit unterschiedlichen Durchmessern und/oder hohen, axial wirkenden Kräften sind solche Verbindungen aber oft nicht sehr zuverlässig.

### Darstellung der Erfindung

Aufgabe der Erfindung ist es, ein Sicherungssystem der eingangs genannten Art zu schaffen, welches die oben genannten Nachteile behebt.

Diese Aufgabe löst ein Sicherungssystem gemäss den Merkmalen des Patentanspruches 1.

Das erfindungsgemässe Sicherungssystem zur axialen Fixierung zweier axialsymmetrischer, einander in axialer Richtung formschlüssig überlappender Bauteile umfasst zwei einander in den sich überlappenden Bereichen der beiden Bauteile gegenüberliegende Umfangsnuten mit vorzugsweise etwa gleicher Breite. Ausserdem umfasst das Sicherungssystem eine Sicherungsvorrichtung mit mindestens zwei Sicherungselementen, die in fixierender Stellung gleichzeitig in die einander gegenüberliegenden Umfangsnuten der beiden Bauteile eingreifen. Die erste Umfangsnut im ersten Bauteil weist eine grössere radiale Höhe auf als die Sicherungselemente und nimmt diese in ihrer nicht fixierender Stellung ganz auf, so dass die Bauteile axial ineinander geschoben werden können. Jedem Sicherungselement ist ein Verschiebungsmittel zugeordnet, mit dem es in radialer Richtung verschiebbar ist. Durch die Verschiebungsmittel können die Sicherungselemente aus ihrer nicht fixierenden Stellung in der ersten Umfangsnut in die fixierende Stellung zwischen der ersten und der zweiten Umfangsnut gebracht werden bzw. umgekehrt. Auf diese Weise ist es möglich eine axiale Fixierung herzustellen, die jederzeit lösbar und wieder herstellbar ist. Durch die Aufteilung der Sicherungsvorrichtung in mehrere Sicherungselemente, die über den Umfang der Bauteile verteilt angeordnet sind, ist es möglich dieses Sicherungssystem für Bauteile von beliebig grossem Durchmesser einzusetzen. Auch die Form der Bauteile muss nicht zwingend zylindrisch sein. Die Bauteile können beispielsweise auch einen ovalen oder sonst achssymmetrischen Querschnitt haben. Bei Bauteilen mit unterschiedlichem Durchmesser können durch geeignete Anpassung der Wandstärken der Bauteile die Durchmesser im einander überlappenden Bereich so ausgebildet werden, dass sie formschlüssig ineinander greifen. Mit dem vorgeschlagenen Sicherungssystem können dann die zwei Bauteile trotz ihrer unterschiedlichen Durchmesser axial gut gegeneinander gesichert werden.

Vorteilhafterweise weist die zweite Umfangsnut des zweiten Bauteils eine geringere radiale Höhe auf als das Sicherungselement. Auf diese Weise kann das Sicherungselement von der nicht fixierenden Stellung in der ersten Umfangsnut sehr einfach radial in die fixierende Stellung verschoben werden, indem das Verschiebemittel solange betätigt wird, bis das Sicherungselement mit dem Nutboden der zweiten Umfangsnut in Anschlag gebaracht ist.

Für jedes Sicherungselement ist wenigstens in einem der beiden Bauteile der jeweiligen Umfangsnut zugeordnet eine radiale Öffnung für die Hindurchführung eines Verschiebemittels vorgesehen. So sind die Verschiebemittel leicht von aussen zugänglich und bedienbar.

Sehr vorteilhaft ist es, als Verschiebemittel eine Schraube vorzusehen. Schrauben sind einfach erhältlich, kostengünstig und einfach in der Handhabung.

Aber auch Verschiebestifte können vorteilhaft als Verschiebemittel eingesetzt sein, wenn beispielsweise ein Überstehen einer Schraubenmutter oder eines Schraubenkopfes über das Bauteil unerwünscht ist.

Als zusätzliche Verschiebemittel können Anpressschrauben vorgesehen sein. Dies ist z.B. bei längeren Sicherungselementen günstig, um über die gesamte Länge des Sicherungselementes eine stabile Positionierung in der fixierenden Stellung zwischen den Umfangsnuten zu gewährleisten.

Sehr vorteilhaft ist es, als zusätzliche Verschiebemittel die Endbereiche der Sicherungselemente als Federenden auszubilden, so ist für längere Sicherungselemente ebenfalls eine sichere Positionierung in der fixierenden Stellung möglich, und die axiale Fixierung kann beispielsweise über eine Art Schnappverschluss erfolgen, der mittels des Verschiebestiftes lösbar ist.

Werden die beiden Umfangsnuten in Umfangsrichtung auf die Länge der Sicherungselemente begrenzt, so bewirkt das Sicherungssystem nicht nur eine Fixierung in axialer Richtung sonder auch in Umfangsrichtung.

Bei Bauteilen, die bereits auf irgendeine Weise zumindest Teilweise in ihren Positionen zueinander festgelegt sind, indem sie beispielsweise an weiteren Bauteilen befestigt oder bereits miteinander verbunden sind, können die Flanken der Umfangsnuten leicht versetzt zueinander angeordnet sein, so dass beim Einschieben der Sicherungselemente in ihre fixierende Stellung die Bauteile in axialer Richtung gegeneinander verspannt werden. Ein besonderer Vorteil ist es in einem solchen Fall, zumindest die mit der Spannkraft beaufschlagte Flanke der zweiten Umfangsnut in stumpfen Winkel zum Nutboden anzuordnen, da die Sicherungselemente so leichter in die zweite Umfangsnut einschiebbar sind. Die Sicherungselemente weisen dann vorteilhafter Weise entsprechend abgeschrägte Flanken auf.

Weitere bevorzugte Ausführungsformen sind Gegenstand weiterer abhängigen Patentansprüche.

### Kurze Beschreibung der Zeichnungen

Im Folgenden wird der Erfindungsgegenstand anhand bevorzugter Ausführungsbeispiele, welche in den beiliegenden Zeichnungen dargestellt sind, näher erläutert. Es zeigen rein schematisch:
- Figuren 1a bis 4a: verschiedene Ausführungsformen des Sicherungssystems im Schnitt durch die Umfangsnuten der axialsymmetrischen Bauteile und quer zur deren Längsachse;
- Figuren 1b bis 4b: die jeweils in den zugehörigen mit a bezeichneten Figuren dargestellten Ausführungsformen im Schnitt durch die Umfangsnut und entlang der Längsachse der axialsymmetrischen Bauteile; und
- Figur 5: im Schnitt durch die Umfangsnuten und entlang der Längsachse der axialsymmetrischen Bauteile zwei einander formschlüssig überlappende Bauteile, die via ein erstes erfindungsgemässes Sicherungssystem mit-einander verbunden und via ein zweites erfindungsgemässes Sicherungssystem spezieller Ausgestaltung in axialer Richtung gegeneinander verspannt sind.

Die in den Zeichnungen verwendeten Bezugszeichen und deren Bedeutung sind in der Bezugszeichenliste zusammengefasst aufgelistet. Grundsätzlich sind in den Figuren gleiche Elemente mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

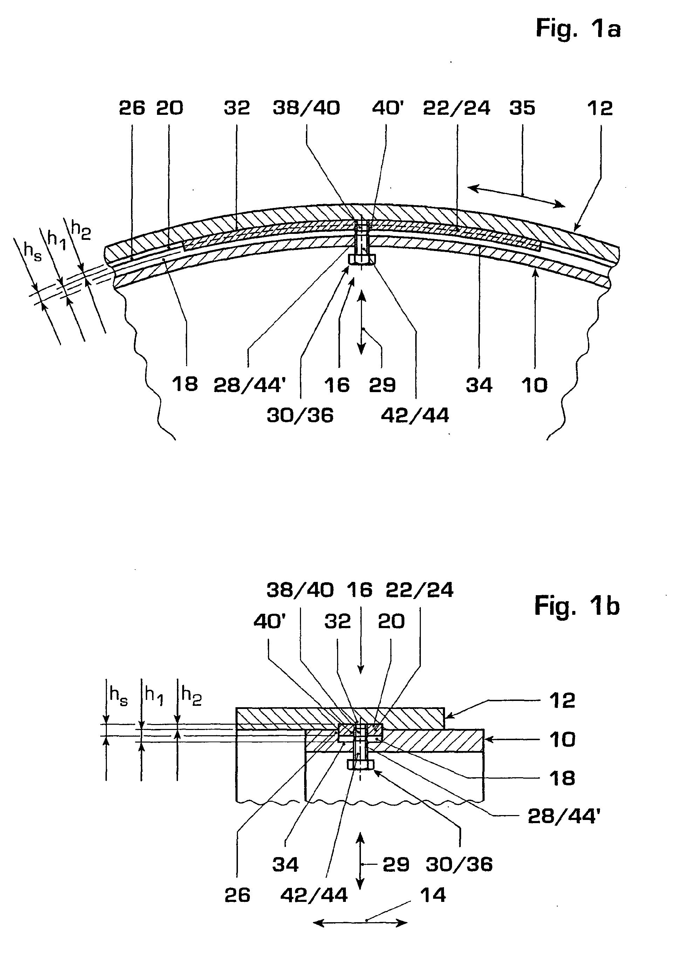

Die Figuren 1a bis 4a und 1b bis 4b sowie Figur 5 zeigen jeweils einen Teil eines ersten axialsymmetrischen Bauteils 10 und einen Teil eines zweiten axialsymmetrischen Bauteils 12, die einander in Achsrichtung 14 überlappen. Die Gestaltung der beiden Bauteile 10,12 ist so gewählt, dass die einander überlappenden Bereiche radial formschlüssig ineinander greifen. Die Bauteile 10, 12 sind durch ein erfindungsgemässes Sicherungssystem 16 in axialer Richtung 14 gegenseitig fixiert. Als Bestandteile des Sicherungssystems 16 weisen die Bauteile 10, 12 in ihren einander überlappenden Bereichen einander gegenüberliegende Umfangsnuten 18, 20 gleicher Breite auf, deren offene Seiten einander zugekehrt sind. Via eine zum Sicherungssystem 16 gehörende Sicherungsvorrichtung 22, welche über den Umfang regelmässig verteilte und in den Umfangsnuten 18, 18', 20, 20' angeordnete Sicherungselemente 24 umfasst, sind die Bauteile 10, 12 in axialer Richtung 14 gegeneinander gesichert. Dargestellt in den Figuren 1a bis 4a ist jeweils nur ein Abschnitt des Umfangs mit einem der über den Umfang verteilten Sicherungselemente 24. Die gezeigten Sicherungselemente 24 sind in allen Figuren in ihrer fixierenden Stellung dargestellt, d.h. das jeweils gezeigte Sicherungselement 24 übergreift den Randbereich 26, 26' der ersten Umfangsnut 18, 18' des ersten Bauteils 10 und greift in die zweite Umfangsnut 20 des zweiten Bauteils 12 ein.

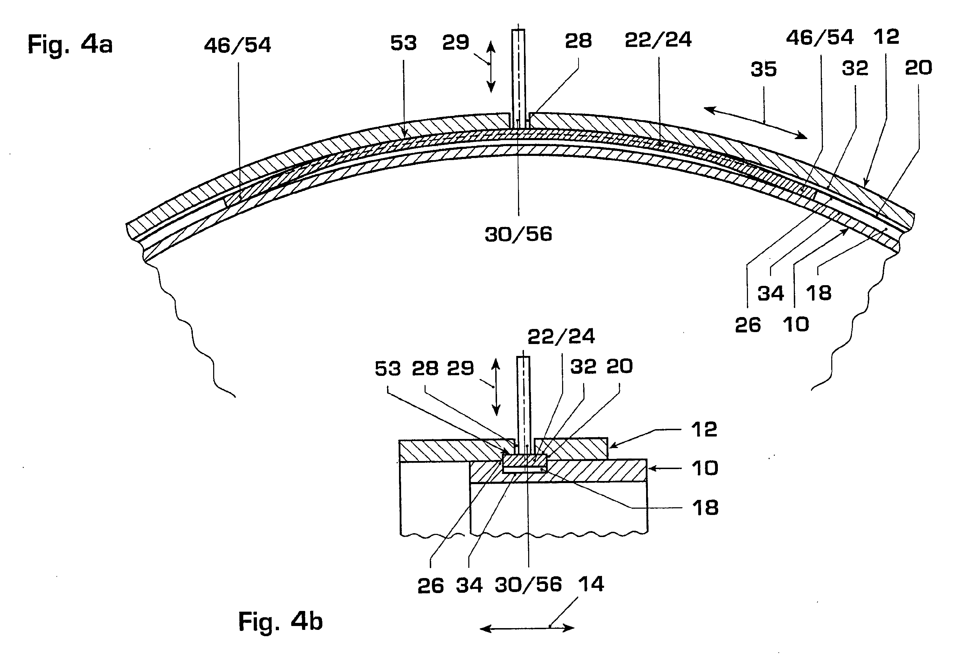

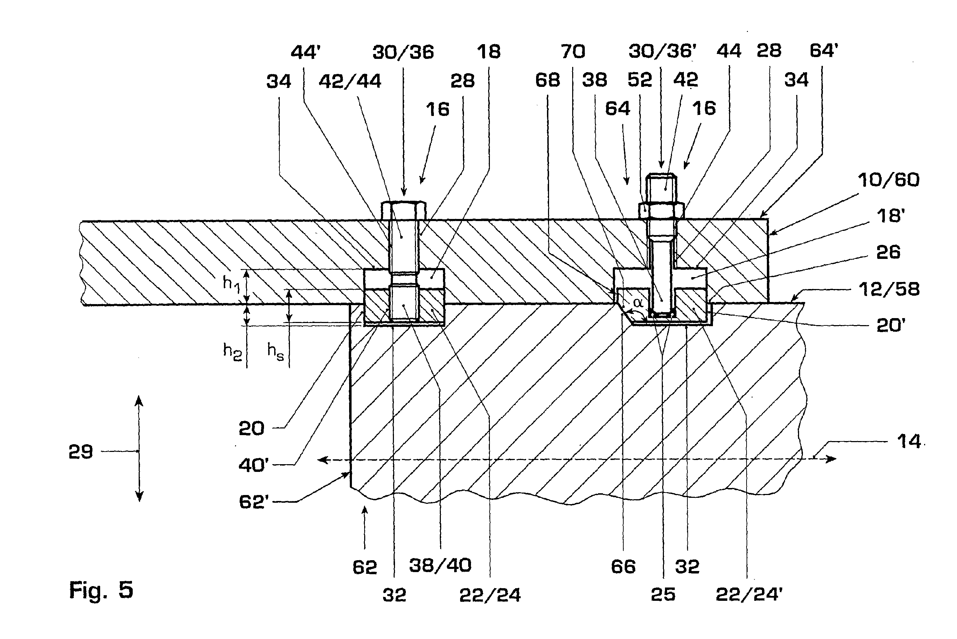

Jeweils mindestens eines der Bauteile 10, 12 weist im Bereich seiner Umfangsnut 18, 18', 20, 20' eine dem Sicherungselement 24 zugeordnete radiale Öffnung 28 zur Hindurchführung eines Verschiebemittels 30 auf. Die radiale Öffnung 28 befindet sich bezüglich der Länge des Sicherungselementes 24 vorzugsweise etwa in dessen Mitte. In den Figuren 1 bis 3 und 5 befindet sich diese Öffnung 28 im ersten Bauteil 10, in Figur 4 dagegen im zweiten Bauteil 12. In allen Figuren ist die radiale Höhe h₁ der ersten Umfangsnut 18, 18' im ersten Bauteil 10 etwas höher oder gleich Hoch wie die radiale Höhe hₛ des Sicherungselementes 24, so dass das Sicherungselement 24 mit Hilfe des Verschiebemittels 30 in eine nicht fixierende Stellung bewegbar ist, in welcher das Sicherungselement 24 als Ganzes in der ersten Umfangsnut 18 positioniert ist (nicht dargestellt). Die radiale Höhe h₂ der zweiten Umfangsnut 20 im zweiten Bauteil 12 ist dagegen geringer als diejenige des Sicherungselementes 24. Beim Verschieben des Sicherungselementes 24 in radialer Richtung 29 aus der nicht fixierenden in die fixierende Stellung, muss das Sicherungselement 24 dann einfach nur bis zum Anschlag an den Nutboden 32 der zweiten Umfangsnut 20, 20' verschoben werden. Beim Verschieben des Sicherungselementes 24 aus der fixierenden in die nicht fixierende Stellung, muss das Sicherungselement 24 dann umgekehrt einfach nur bis zum Anschlag an den Nutboden 34 der ersten Umfangsnut 18, 18' im ersten Bauteil 10 verschoben werden. Als erstes Bauteil 10 mit der ersten Umfangsnut 18, 18' ist jeweils das Bauteil definiert, dessen Umfangsnut die radial grössere Höhe aufweist. Dies kann das radial innenliegende Bauteil sein, wie in den Figuren 1 bis 4, oder auch das radial aussen liegenden Bauteil, wie in Figur 5.

Die Figuren 1a und 1b zeigen eine erste Ausführungsform des erfindungsgemässen Sicherungssystems 16. Das Sicherungselement 24 weist eine relativ geringe Länge in Umfangsrichtung 35 auf. Im radial innen liegenden, ersten Bauteil 10 ist der ersten Umfangsnut 18 zugeordnet eine radiale Öffnung 28 vorgesehen, die bezüglich der Länge des Sicherungselementes 24 etwa in dessen Mitte liegt. Durch diese Öffnung 28 ist als Verschiebemittel 30 eine Schraube 36 hindurchgeführt. Die Schraube 36 weist in ihrem Fussbereich 38 ein Linksgewinde 40 und in ihrem Kopfbereich 42 ein Rechtsgewinde 44 auf welche mit entsprechenden Innengewinden 40', 44' im Sicherungselement 24 und in der Öffnung 28 des ersten Bauteils 10 zusammenwirken. Auf diese Weise lässt sich mit wenigen Drehungen der Schraube 36 das Sicherungselement 24 von der fixierenden in die nicht fixierende Stellung und wieder zurück bewegen.

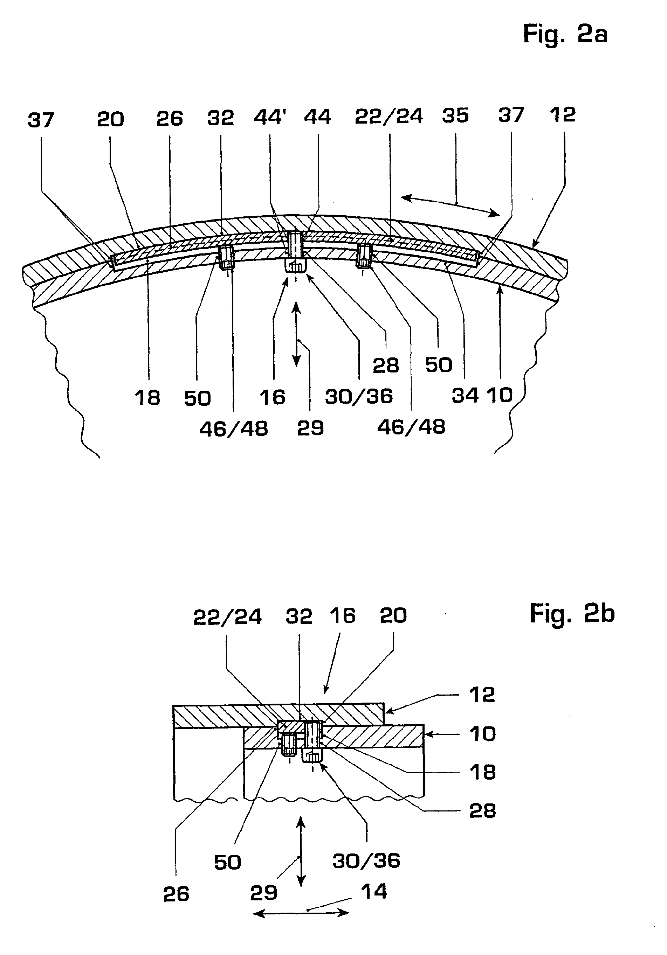

In den Figuren 2a, 2b ist eine zweite Ausführungsform des erfindungsgemässen Sicherungssystems 16 gezeigt, bei welchem die Umfangsnuten 18, 20 des ersten und zweiten Bauteils 10, 12 in Umfangsrichtung 35 etwa entsprechend der Länge des Sicherungselementes 24 begrenzt sind, so dass das Sicherungssystem 16 nicht nur in axialer Richtung 14 sondern auch in Umfangsrichtung 35 fixierend wirkt. Im gezeigten Beispiel ist die Begrenzung 37 der Umfangsnuten 18, 20 durch Ausfräsen von entsprechend langen Nutsegementen entlang des Umfanges realisiert. Denkbar ist aber auch eine Begrenzung 37 der Umfangsnuten 18, 20 z.B. durch einfügen von Stoppelementen an entsprechender Stelle in die Nuten. Als Stoppelemente können beispielsweise Zapfen, Stoppschrauben o.ä. vorgesehen sein. Wie in den Fig. 1a, 1b ist auch hier etwa in der Mitte des Sicherungselementes 24 eine radiale Öffnung 28 im ersten Bauteil 10 vorgesehen, durch die als Verschiebemittel 30 eine Schraube 36 hindurchgeführt ist. Diese Schraube 36 weist ein einfaches Rechtsgewinde 44 auf, das mit entsprechenden Innengewinden 44' im Sicherungselement 24 und der Öffnung 28 zusammenwirkt. Als zusätzliche Verschiebemittel 46 sind zwei Anpressschrauben 48 vorgesehen, die durch radiale Löcher 50 mit entsprechendem Innengewinde hindurchgeführt sind und auf das Sicherungselement 24 drücken. Die radialen Löcher 50 sind in Umfangsrichtung 35 beabstandet auf beiden Seiten der Öffnung 28 angeordnet. Die Begrenzung 37 der Nuten 18, 20 in Umfangsrichtung 35 hat ausser der Fixierung der Bauteile 10, 12 in Umfangsrichtung 35, noch einen weiteren Vorteil: Sollte die Schraube 36 aus dem Sicherungselement 24 herausgedreht werden, so kann sich das Sicherungselement 24 nicht innerhalb der Umfangsnuten 18, 20 in Umfangsrichtung 35 verschieben und sozusagen verloren gehen. Ein Wiedereindrehen der Schraube 36 in das Sicherungselement 24 ist jederzeit wieder möglich.

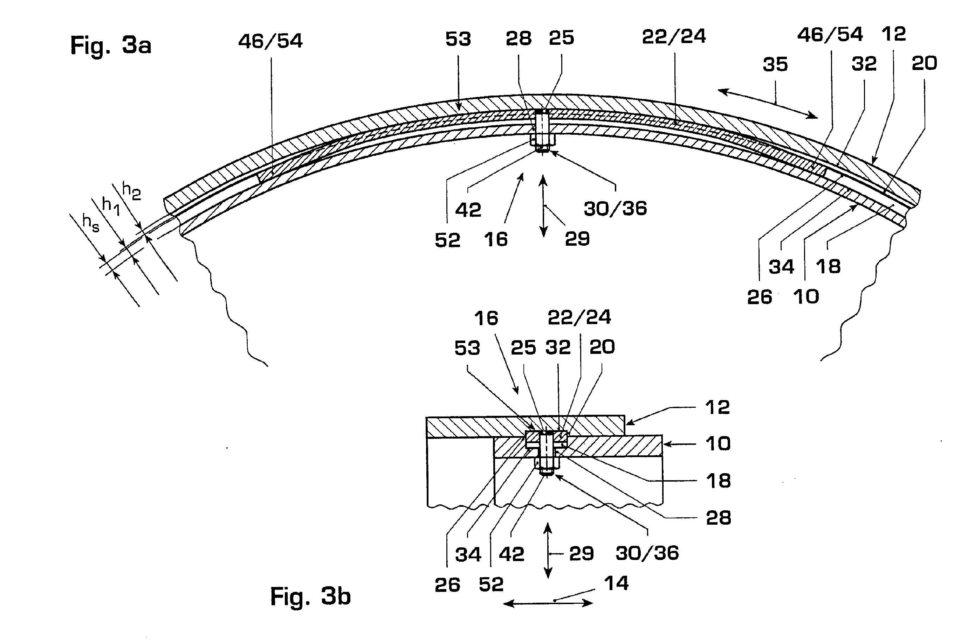

Die Figuren 3a und 3b zeigen eine weitere Ausführungsform der erfindungsgemässen Sicherungssystems 16. Als Verschiebelement 30 ist wiederum eine Schraube 36 vorgesehen, die in diesem Beispiel mit dem Sicherungselement 24 mittels einer Schweissnaht 25 verbunden ist und durch eine gewindefreie radiale Öffnung 28 im radial innenliegenden ersten Bauteil 10 hindurchgeführt ist. Der Kopfbereich 42 der Schraube 36 ragt durch die Öffnung 28 aus dem Bauteil 10 heraus. Mittels einer im Kopfbereich 42 aufgeschraubten Mutter 52 ist die Schraube 36 zum einen gesichert und zum anderen ist das mit der Schraube 36 verbundene Sicherungselement 24 durch Drehen an der Mutter 52 in radialer Richtung 29 zwischen der fixierenden und der nicht fixierenden Stellung verschiebbar. Als zusätzliche Verschiebemittel 46 sind die Endbereiche des Sicherungselementes 24 als Federenden 54 ausgebildet. Die Ausgestaltung des Sicherungselementes 24 mit den Federenden 54 führt dazu, dass der mittlere Bereich 53 des Sicherungselementes 24 auch ohne die Schraube 36 in die fixierende Stellung gedrückt und in dieser gehalten wird, während die Federenden 54 am Nutboden 34 der ersten Umfangsnut 18 abgestützt sind. Die Schraube 36 ist nötig um den mittleren Bereich 53 des Sicherungselementes 24 in die nicht fixierende Stellung in der ersten Umfangsnut 18 zu ziehen und dort zu halten.

In den Figuren 4a und 4b ist, wie in den Figuren 3a und 3b ein Sicherungselement 24 mit Federenden 54 dargestellt, welche am Nutboden 34 der ersten Umfangsnut 18 abgestützt sind und den mittleren Bereich 53 des Sicherungselementes 24 in die fixierende Stellung drücken. Als Verschiebemittel 30 ist aber anstelle einer Schraube 36 ein entfernbarer Verschiebestift 56 vorgesehen, der durch eine radiale Öffnung 28 im zweiten Bauteil 12, hindurchführbar ist. Mit Hilfe dieses Verschiebestiftes 56 kann der mittlere Bereich 53 des Sicherungselementes 24 in die nicht fixierende Stellung, in die erste Umfangsnut 18 gedrückt werden und die beiden Bauteile 10, 12 können voneinander gelöst werden. Im Gegensatz zur Verschiebung mittels Schraube 36 kann bei einer Verschiebung mittels Verschiebestift 56, so wie es hier gezeigt ist, das Sicherungselement 24 nicht ohne äusseres Zutun in der ersten Umfangsnut 18 gehalten werden. Vorteil bei dieser Ausführungsform ist allerdings, dass in fixierender Stellung der Verschiebestift 56 entfernt wird, und somit keine Elemente, wie beispielsweise Schraubenköpfe 42 und/oder Muttern 52, über eines der beiden Bauteile 10, 12 hinausragen.

In Figur 5 ist eine als Vollzylinder ausgebildete Welle 58 gezeigt, die radial innen liegend das zweite Bauteil 12 bildet. Ein Rohr 60 ist auf die Welle 58 axial aufgeschoben und bildet das erste Bauteil 10. In ihren einander überlappenden Bereichen weisen das Rohr 60 als erstes Bauteil 10 zwei erste Umfangsnuten 18, 18' mit grosser radialer Höhe h₁ und die Welle 58 als zweites Bauteil 12 zwei den ersten Umfangsnuten 18, 18' gegenüberliegende zweite Umfangsnuten 20, 20' mit geringerer radialer Höhe h₂ auf. Die im Endbereich 62 der Welle 58 liegenden Umfangsnuten 18, 20 liegen einander genau gegenüber und nehmen zur axialen Fixierung Sicherungselemente 24 mit Schrauben 36 gemäss dem Ausführungsbeispiel in den Figuren 1a, 1b auf. Die Umfangsnuten 18' 20' im Endbereich 64 des Rohres 60 dagegen sind leicht versetzt zueinander angeordnet; genauer gesagt, ist die Umfangsnut 20' der Welle 58 gegenüber der Umfangsnut 18' des Rohres 60 gegen das Rohrende 64' hin versetzt. Die dem Wellenende 62' zugewandte Flanke 66 der Umfangsnut 20' in der Welle 58 ist gegenüber dem Nutboden 32 der zweiten Nut 20' in einem stumpfen Winkelα angeordnet. Die mit dieser Flanke 66 der Umfangsnut 20' zusammenwirkenden Flanken 68 der Sicherungselemente 24' weisen eine entsprechende Abschrägung 70 auf. Zum radialen Verschieben der Sicherungselementen 24' sind Schrauben 36' vorgesehen, deren Kopfbereiche 42 über die radialen Öffnungen 28 des Rohres 58 hinausragen und auf welche Muttern 52 aufgeschraubt sind. Im Fussberiech 38 der Schrauben 36' sind diese via Schweissverbindungen 25 fest mit den Sicherungselementen 24' verbunden. Werden die Sicherungselemente 24' aus der ersten Umfangsnut 18' des Rohres 60 in die fixierende Stellung verschoben, so gleiten die Abschrägungen 70 der Flanken 68 der Sicherungselemente 24' an der im Winkel α zum Nutboden 32 angeordneten Flanke 66 der Umfangsnut 20' entlang. Das Sicherungselement 24 wird in die zweite Umfangsnut 20' der Welle 58 hineingedrückt und das Rohr 60 wird gegenüber der Welle 58 in axialer Richtung 14 gegen das Rohrende 64' hin verspannt.

Die Verschiebeelemente 30 können also drückend und/oder ziehend wirken und sowohl im ersten Bauteil 10 als auch im zweiten Bauteil 12 angeordnet sein. In den in den Figuren gezeigten Beispielen sind die Sicherungselemente 24, 24' jeweils als Kreisbogensegmente ausgestaltet. Es ist aber auch denkbar die Sicherungselemente 24, 24' in Form von Polygonen oder einfachen Winkeln mit zwei Schenkeln auszugestalten. Für Bauteile 10, 12 mit grossem Durchmesser können sogar Sicherungselemente 24, 24' in Stabform günstig sein. Diese sollten dann aber keine zu grosse Länge aufweisen, damit ihre Endbereiche nicht zu weit von der Oberfläche des innenliegenden Bauteils 10, 12 abstehen. Bei solchen stabförmigen Sicherungselementen 24, 24' werden vorteilhaft statt einem Verschiebemittel 30 in der Mitte des Sicherungselementes 24, 24' zwei Verschiebemittel 30 in den Endbereichen des Sicherungselementes 24, 24' eingesetzt. Die Sicherungselemente 24, 24' sind vorzugsweise aus Federstahl oder hochfesten Stählen mit grosser Streckgrenze hergestellt. Auch Vergütungsstähle oder andere Materialien mit entsprechenden Eigenschaften können verwendet werden.

### Bezugszeichenliste

- h₁: radiale Höhe erste Nut
- h₂: radiale Höhe zweite Nut
- hₛ: radiale Höhe Sicherungselement
- α: Winkel Flanke/Nutboden

- 10: erstes Bauteil
- 12: zweites Bauteil
- 14: axiale Richtung
- 16: Sicherungssystem
- 18, 18': erste Umfangsnut
- 20, 20': zweite Umfangsnut
- 22: Sicherungsvorrichtung
- 24, 24': Sicherungselement
- 25: Schweissnaht
- 26: Ränder der ersten Nut
- 28: radiale Öffnung
- 29: radiale Richtung
- 30: Verschiebemittel
- 32: Nutboden zweite Nut
- 34: Nutboden erste Nut
- 35: Umfangsrichtung

- 36, 36': Schraube
- 37: Begrenzung der Umfangsnut
- 38: Fussbereich Schraube
- 40: Linksgewinde
- 40': Innengewinde links
- 42: Kopfbereich Schraube
- 44: Rechtsgewinde
- 44': Innengewinde rechts
- 46: zusätzliche Verschiebemittel
- 48: Anpressschraube
- 50: radiale Löcher
- 52: Mutter
- 53: mittlerer Bereich
- 54: Federende
- 56: Verschiebestift
- 58: Welle
- 60: Rohr
- 62: Endbereich Welle
- 62': Wellenende
- 64: Endbereich Rohr
- 64': Rohrende
- 66: Flanke der zweiten Nut
- 68: Flanke Sicherungselement
- 70: Abschrägung Flanke

## Patentansprüche

1. Sicherungssystem zur gegenseitigen axialen Fixierung zweier axialsymmetrischer, einander in axialer Richtung (14) überlappender Bauteile (10, 12), deren sich überlappende Bereiche radial formschlüssig ineinander greifen, und mit zwei einander in den sich überlappenden Bereichen der Bauteile (10, 12) gegenüberliegenden Umfangsnuten (18, 18', 20, 20') sowie mit einer Sicherungsvorrichtung (22), die in die erste Umfangsnut (18) des ersten Bauteils (10) einsetzbar ist, und zur axialen Fixierung die Ränder (26, 26') der ersten Umfangsnut (18, 18') übergreifend in die zweite Umfangsnut (20, 20') des zweiten Bauteiles (12) eingreift, **dadurch gekennzeichnet, dass** die Sicherungsvorrichtung (22) mindestens zwei Sicherungselemente (24, 24') aufweist, welche zur Fixierung gleichzeitig in die beiden Umfangsnuten (18, 18', 20, 20') eingreifen, wobei die radiale Höhe (h₁) der ersten Umfangsnut (18, 18') im ersten Bauteil (10) mindestens so gross ist wie die radiale Höhe (hₛ) des Sicherungselementes (24, 24'), und dass das Sicherungssystem (16) den Sicherungselementen (24, 24') zugeordnete Verschiebemittel (30) zum Verschieben der Sicherungselemente (24, 24') in radialer Richtung (29) umfasst.

2. Axiales Sicherungssystem nach Anspruch 1, **dadurch gekennzeichnet, dass** die radiale Höhe (h₂) der zweiten Umfangsnut (20, 20') im zweiten Bauteil (12) geringer ist als die radiale Höhe (hₛ) des Sicherungselementes (24, 24').

3. Axiales Sicherungssystem nach Anspruch 1 oder 2, **dadurch gekennzeichnet, dass** für jedes Sicherungselement (24, 24') eines der Bauteile (10, 12) eine der jeweiligen Umfangsnut (18, 18', 20, 20') zugeordnete radiale Öffnung (28) zum hindurchführen des Verschiebemittels (30) aufweist.

4. Axiales Sicherungssystem nach einem der Ansprüche 1 bis 3, **dadurch gekennzeichnet, dass** als Verschiebemittel (30) für das Sicherungselement (24, 24') eine Schraube (36, 36') vorgesehen ist.

5. Axiales Sicherungssystem nach einem der Ansprüche 1 bis 4, **dadurch gekennzeichnet, dass** als Verschiebemittel (30) ein Verschiebestift (56) vorgesehen ist.

6. Axiales Sicherungssystem nach Anspruch 4, **dadurch gekennzeichnet, dass** die Schraube (36, 36') in ihrem Fussbereich (38) fest mit dem Sicherungselement (24, 24') verbunden und in ihrem Kopfbereich (42) ein Gewinde (44) vorgesehen ist, das mit einer auf den über das Bauteil (10, 12) hinausragenden Kopfbereich (42) aufgeschraubten Mutter (52) zusammenwirkt und durch dieses Zusammenwirken eine Verstellbarkeit in radialer Richtung (29) möglich ist.

7. Axiales Sicherungssystem nach Anspruch 4, **dadurch gekennzeichnet, dass** die Schraube (36, 36') ein Rechtsgewinde (44) und ein Linksgewinde (40) aufweist und das Sicherungselement (24, 24') und die Öffnung (28) im Bauteil (10, 12) entsprechende Innengewinde (40', 44') zur Aufnahme der Schraube (36, 36') aufweisen, die im Zusammenwirken eine Verstellbarkeit des Sicherungselementes 24 in radialer Richtung (29) bewirken.

8. Axiales Sicherungssystem nach einem der vorgängigen Ansprüche **dadurch gekennzeichnet, dass** als zusätzliche Verschiebemittel (46) Anpressschrauben (48) vorgesehen sind, die durch den Umfangsnuten (18, 18', 20, 20') und den Sicherungselementen (24, 24') zugeordnete radiale Löcher (50) der Bauteile (10, 12) hindurchführbar sind, wobei sich die radialen Löcher (52) vorzugsweise im gleichen Bauteil (10, 12) befinden wie die jeweilige radiale Öffnung (28).

9. Axiales Sicherungssystem nach einem der vorgängigen Ansprüche, **dadurch gekennzeichnet, dass** als zusätzliche Verschiebemittel (46) am Sicherungselement (24, 24') Federenden (54) ausgebildet sind.

10. Axiales Sicherungssystem nach einem der vorgängigen Ansprüche, **dadurch gekennzeichnet, dass** die Sicherungselemente (24, 24') eine bestimmte Länge aufweisen und die Umfangsnuten (18, 18', 20, 20') in Umfangsrichtung (35) auf die Länge der Sicherungselemente (24, 24') begrenzt sind.

11. Axiales Sicherungssystem nach einem der vorgängigen Ansprüche, **dadurch gekennzeichnet, dass** bei bereits miteinander verbundenen Bauteilen (10, 12) wenigstens eine Flanke der ersten Umfangsnut (18, 18') gegen eine Flanke (66) der zweiten Umfangsnut (20, 20') derart axial versetzt angeordnet sind, dass das Sicherungselement (24, 24') in seiner fixierenden Stellung das zweite Bauteil (12) gegenüber dem ersten Bauteil (10) in axialer Richtung (14) verspannt,

12. Axiales Sicherungssystem nach Anspruch 11, **dadurch gekennzeichnet, dass** die mit der Spannkraft beaufschlagte Flanke (66) der zweiten Umfangsnut (20, 20') mit dem Nutboden (34) einen stumpfen Winkel α einschliesst und die entsprechenden Flanken (68) der Sicherungselemente (24, 24') vorzugsweise eine entsprechende Abschrägung (70) aufweisen.
